# EUROPÄISCHE PATENTSCHRIFT

(11) **EP 0 525 526 B1**
(45) Veröffentlichungstag und Bekanntmachung des Hinweises auf die Patenterteilung: **26.04.2000**
(21) Anmeldenummer: 92112139.8
(22) Anmeldetag: 16.07.1992
(51) Int. Cl.: C09C 1/00

(54) **Kohlenstoffhaltige Metalloxidpigmente**
Carbon containing metal oxide pigments
Pigments à base d'oxyde métallique contenant du carbone

(30) Priorität: 30.07.1991 DE 4125134
(43) Veröffentlichungstag der Anmeldung: 03.02.1993
(73) Patentinhaber: MERCK PATENT GmbH, 64271 Darmstadt (DE)
(72) Erfinder: Franz, Klaus-Dieter, Dr., W-6233 Kelkheim (DE); Ambrosius, Klaus, Dr., W-6110 Dieburg (DE); Brückner, Hans-Dieter, Dr., W-6100 Darmstadt 23 (DE)

(56) Entgegenhaltungen:
- EP-A- 0 354 374
- EP-A- 0 499 864
- FR-A- 1 326 900
- FR-A- 2 336 456
- PATENT ABSTRACTS OF JAPAN vol. 11, no. 18 (C-398) 17. Januar 1987 & JP-A-61 192 749 ( HINODE KAGAKU KOGYO ) 27. August 1986

## Beschreibung

Die Erfindung betrifft kohlenstoffhaltige plättchenförmige Pigmente sowie deren Herstellungsverfahren und deren Verwendung.

Plättchenförmige Substrate wie z.B. Metalle, Metalloxide oder mit Metalloxiden beschichtete plättchenförmige Materialien finden in vielen technischen Bereichen Verwendung. Durch das Einarbeiten von Kohlenstoff in Pigmente werden besondere Farbeffekte erzielt. Diese kohlenstoffhaltigen Pigmente finden sowohl zur Pigmentierung von Lacken, Pulverlacken, Farben, Druckfarben, Kunststoffen und dergleichen als auch in kosmetischen Zubereitungen Verwendung.

Der bislang einzige Weg zur Herstellung von Kombinationen aus Kohlenstoff-Metalloxidglimmerpigmenten besteht im Aufbringen von Kohlenstoff aus wäßriger Suspension unter Verwendung geeigneter oberflächenaktiver Hilfsmittel oder durch Pyrolyse organischer Verbindungen. In der DE-AS 11 65 182 ist ein aufwendiges Pyrolyse-Verfahren beschrieben, wobei der Ruß sich naturgemäß lediglich auf der Pigmentoberfläche abscheidet. In dem in der DE-PS 25 57 796 beschriebenen Verfahren wird zunächst ein Substrat mit einer Rußdispersion vermischt. Durch Zugabe einer Metallsalzlösung unter Hydrolysebedingungen wird so eine rußhaltige Metallhydroxidschicht auf das Substrat aufgefällt.

Aus der FR-A-2336456 und JP-A-61-192749 sind ebenfalls rußhaltige Pigmente bekannt.

Es hat sich jedoch herausgestellt, daß die getrockneten Pigmente für verschiedene Verwendungszwecke ungeeignet sind, da sie unzureichende Abriebfestigkeit besitzen. Gerade zur Einarbeitung in Kosmetika ist diese Eigenschaft äußerst wünschenswert.

Ein weiterer Nachteil ist das häufig beobachtbare Ausbluten des Rußes beim Suspendieren der Pigmente in organischen Lösungsmitteln zur Herstellung von Lacksystemen.

Des weiteren zeichnen sich diese Pigmente durch einen starken Glanzverlust aus, verursacht durch Adsorptions- und Streuphänomene der grobteiligen, aufgefällten Rußagglomerate.

Es bestand somit ein Bedürfnis zur Herstellung von kohlenstoffhaltigen Pigmenten hoher Abriebfestigkeit, die aufgrund ihres Gehaltes am Kohlenstoff besondere Farbeffekte aufweisen ohne daß deren Herstellung einen großen technischen Aufwand erfordert. Diese Aufgabe konnte durch die vorliegende Erfindung gelöst werden.

Überraschend wurde nun gefunden, daß bei der Reaktion von mit Metalloxid beschichteten plättchenförmigen Substraten mit gasförmigen und festen Kohlenwasserstoffen unter O₂-freien Bedingungen nicht nur eine Reduktion der Metalloxide, sondern auch eine Abscheidung von Kohlenstoff erfolgt. Durch die direkte Zersetzung von kohlenstoffhaltigen Verbindungen unter inerten Bedingungen an den oxidischen Oberflächen bei Temperaturen oberhalb von 200 °C lassen sich direkt feinstteilige Kohlenstoffpartikel in gewünschter Menge als äußerst abriebfeste Beschichtungen abscheiden.

Im Gegensatz zur JP 61-192749, wo auch die Abscheidung von Kohlenstoff auf TiO₂-Glimmer in einer reduzierenden Atmosphäre beschrieben wird, wird bei den erfindungsgemäßen Pigmenten die Kohlenstoffabscheidung durch die Reduktion des redoxaktiven Systems induziert.

Gegenstand der Erfindung sind somit kohlenstoffhaltige plättchenförmige Pigmente, erhältlich durch Pyrolyse kohlenstoffhaltiger Verbindungen in Gegenwart von entweder plättchenförmigen Metalloxiden bzw. Metalloxidgemischen oder mit Metalloxiden bzw. Metalloxidgemischen beschichteten plättchenförmigen Substraten, die mit Titandioxid und mindestens einem weiteren Metalloxid beschichtet sind, unter inerten Bedingungen bei Temperaturen oberhalb von 200 °C, so daß das Metall des Metalloxids reduziert wird.

Für die Reduktion der Metalloxide bzw. Metalloxidgemische auf der Substratoberfläche können alle dem Fachmann bekannten redoxaktiven Metalloxide eingesetzt werden, vorzugsweise Metalloxide, die ein kleineres Redoxpotential als Ti III/IV aufweisen. Geeignete Metalloxide sind z.B. SnO, SnO₂, CuO, Ag₂O, Ce₂O₃ und/oder CeO₂ sowie insbesondere Eisenoxide.

Gegenstand der Erfindung ist somit auch, daß es sich bei dem Metalloxid bzw. Metalloxidgemisch um Fe₂O₃, SnO, SnO₂, Ag₂O, CuO, Ce₂O₃ und/oder CeO₂ handelt.

Gegenstand der Erfindung ist auch ein Verfahren zur Herstellung von kohlenstoffhaltigen Pigmenten, dadurch gekennzeichnet, daß man ein plättchenförmiges Metalloxid bzw. Metalloxidgemisch oder ein mit Metalloxid bzw. Metalloxidgemischen beschichtetes plättchenförmiges Substrat, das mit Titandioxid und mindestens einem weiteren Metalloxid beschichtet ist, dem Gasstrom eines leicht flüchtigen Kohlenwasserstoffs bei Temperaturen oberhalb von 200 °C aussetzt, oder daß man eine flüssige oder feste kohlenstoffhaltige Verbindung auf das Metalloxid oder das Substrat aufbringt und anschließend pyrolysiert, wobei nach beiden Varianten unter Sauerstoffausschluß verfahren wird und so, daß das Metall des Metalloxides reduziert wird.

Bevorzugt werden als Substrat Metalloxidplättchen sowie metalloxidbeschichtete plättchenförmige Materialien verwendet. Insbesondere geeignet sind plättchenförmiges Eisenoxid sowie mit Metalloxiden beschichtete Glimmerplättchen (Muskovit, Phlogopit, synthetischer Glimmer). Die letzteren als Perlglanzpigmente bekannten Pigmente sind z.B. aus den deutschen Patenten und Patentanmeldungen 14 67 568, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt.

Zur Herstellung der erfindungsgemäßen kohlenstoffhaltigen Pigmente können verschiedene Verfahrensvarianten angewendet werden. Am einfachsten ist die Reaktionsdurchführung durch Umsetzung der Substrate im Gasstrom von leicht flüchtigen Kohlenwasserstoffen wie z.B. Methan, Ethan, Propan oder Butan bei 400-1000 °C im geheizten Durchflußrohr. Umgekehrt ist es aber genauso gut möglich, kohlenstoffhaltige C, H, N oder O-Verbindungen sowie Polymere aus wäßriger oder organischer Suspension auch in Form unlöslicher Salze ein- bis vierwertiger Kationen oder Anionen auf das zu beschichtende Substrat abzuscheiden und anschließend zu pyrolysieren. Hierbei sollte das Verhältnis Sauerstoff Kohlenstoff ≤ 2 betragen. Es können somit auch Salze von Polycarbonsäuren auf die Pigmentoberfläche aufgefällt werden sowie die Metallsalze höherer Carbonsäuren wie z.B. Laurinsäure, Palmitinsäure, Stearinsäure oder n-Hexacosansäure, die dann ein noch günstigeres, d.h. kleineres Sauerstoff : Kohlenstoff-Verhältnis aufweisen. Als Salze von Polycarbonsäuren kommen alle dem Fachmann bekannten Salze in Betracht, vorzugsweise jedoch die Oxalate, insbesondere Eisen(II)oxalat.

Zur Fällung der Salze kann jede Säure bzw. Base eingesetzt werden. Die optimalen Konzentrationen und pH-Werte können durch Routineversuche ermittelt werden.

Zweckmäßigerweise wird der einmal zur Fällung eingestellte pH-Wert während der gesamten Fällung beibehalten, um einheitliche Pigmente zu erzielen.

Zweckmäßig wird man die technisch leicht zugänglichen Basen wie NaOH, KOH oder Ammoniak, als Säuren verdünnte Mineralsäuren, z.B. HCl oder H₂SO₄ verwenden. Da die Basen und Säuren nur zur pH-Wertänderung dienen, ist ihre Natur unkritisch, so daß auch andere Basen und Säuren eingesetzt werden können.

Unter pyrolytischen Bedingungen, bei denen das Metall des Metalloxids bzw. des Metalloxidgemisches auf der Substratoberfläche reduziert wird, wirken dann in einem Stickstoffstrom bei Temperaturen über 200 °C die kohlenstoffhaltigen Verbindungen in Form von C, CO₂ und CO gemäß dem Boudouard-Gleichgewicht auf die Pigmentoberfläche ein.

Die Kohlenstoffabscheidung ist dabei steuerbar durch die Dosierung des Kohlenwasserstoffs oder durch das Metalloxid auf der Substratoberfläche.

Der Anteil an Kohlenstoff in den erfindungsgemäßen Pigmenten liegt im allgemeinen zwischen 1 und 90 Gew.%, vorzugsweise zwischen 2 und 80 % bezogen auf das Gesamtpigment. Aufgrund der unterschiedlichen Substrate kann der gewichtsmäßige Anteil an Kohlenstoff sehr stark variieren.

Mit steigender Kohlenstoffmenge nimmt das Pigment einen immer graphitähnlicheren Glanz an.

Die erfindungsgemäß hergestellten Pigmente sind abriebfest, so daß sie für die verschiedensten Zwecke, insbesondere in der Kosmetik eingesetzt werden können.

Gegenstand der Erfindung ist somit auch die Verwendung der kohlenstoffhaltigen Pigmente in Formulierungen wie Lacken, Farbstoffen, Kunststoffen und Kosmetika.

Gegenstand der Erfindung sind weiterhin Formulierungen, die die erfindungsgemäßen Pigmente enthalten.

Die nachfolgenden Beispiele sollen die Erfindung näher verdeutlichen, ohne sie jedoch zu begrenzen.

### Beispiel 1

Zur Suspension von 100 g Iriodin 300 (TiO₂/Fe₂O₃-Glimmer mit einer Teilchengröße von 10-60 µm der Firma E. Merck, Darmstadt) in 1000 ml Wasser wird bei einem pH-Wert von 6 eine alkalische Lösung von 4 g Natriumstearat in 100 ml Wasser zudosiert, so daß unter Konstanthaltung des pH-Wertes mit 5%iger Salzsäure Stearinsäure ausfällt. Anschließend wird abfiltriert, getrocknet und bei 800 °C im N₂-Gasstrom pyrolysiert.

Man erhält ein hellgraues, silbrig glänzendes Pulver mit einem Kohlenstoffgehalt von 2 %.

### Beispiel 2

In der Suspension von 100 g Iriodin 100 (TiO₂-Glimmer) wird bei einem pH-Wert von 4 durch Zugabe einer wäßrigen Lösung von FeSO₄ (44 g FeSO₄ · 7 H₂O in 100 ml Wasser) und der stöchiometrischen Menge an Natriumoxalat (21,2 g Na₂C₂O₄ in 100 ml Wasser) bei 75 °C Eisenoxalat (22,8 g FeC₂O₄) ausgefällt. Die nachfolgende Zersetzung bei 800 °C im N₂-Gasstrom ergibt ein silbergraues Ilmenit-TiO₂-Glimmerpigment. Der Gehalt an FeO beträgt 11,3 g entsprechend ca. 10 %.

### Beispiele 3-12

Glimmer und Metalloxid werden im Gasstrom (Kohlenwasserstoff/Stickstoff) im geheizten Durchflußrohr bei erhöhten Temperaturen umgesetzt.

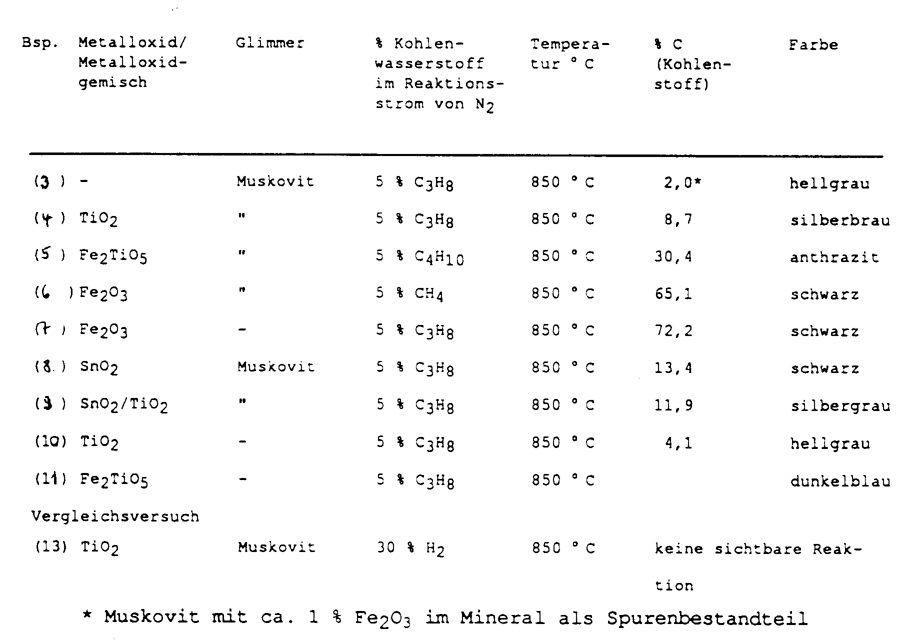

## Patentansprüche

1. Kohlenstoffhaltige plättchenförmige Pigmente, erhältlich durch Pyrolyse kohlenstoffhaltiger Verbindungen in Gegenwart von entweder plättchenförmigen Metalloxiden bzw. Metalloxidgemischen oder mit Metalloxiden bzw. Metalloxidgemischen beschichteten plättchenförmigen Substraten, die mit Titandioxid und mindestens einem weiteren Metalloxid beschichtet sind, unter inerten Bedingungen bei Temperaturen oberhalb von 200 °C, so daß das Metall des Metalloxids reduziert wird.

2. Pigmente nach Anspruch 1, dadurch gekennzeichnet, das es sich bei dem Metalloxid bzw. Metalloxidgemischen um Fe₂O₃, SnO, SnO₂, Ag₂O, CuO, Ce₂O₃ und/oder CeO₂ handelt.

3. Verfahren zur Herstellung von kohlenstoffhaltigen Pigmenten nach Anspruch 1, dadurch gekennzeichnet, daß man ein plättchenförmiges Metalloxid bzw. Metalloxidgemisch oder ein mit Metalloxid bzw. Metalloxidgemischen beschichtetes plättchenförmiges Substrat, das mit Titandioxid und mindestens einem weiteren Metalloxid beschichtet ist, dem Gasstrom eines leicht flüchtigen Kohlenwasserstoffs bei Temperaturen oberhalb von 200 °C aussetzt, oder daß man eine flüssige oder feste kohlenstoffhaltige Verbindung auf das Metalloxid oder das Substrat aufbringt und anschließend pyrolysiert, wobei nach beiden Varianten unter Sauerstoffausschluß verfahren wird und so, daß das Metall des Metalloxides reduziert wird.

4. Verwendung von Pigmenten nach Anspruch 1 oder 2 in Formulierungen wie Lacken, Farbstoffen, Kunststoffen und Kosmetika.

5. Formulierungen enthaltend Pigmente nach Anspruch 1 oder 2.

## Claims

1. Carbon-containing plate-like pigments, obtainable by pyrolysis of carbon-containing compounds in the presence of either plate-like metal oxides or metal oxide mixtures or plate-like substrates coated with metal oxides or metal oxide mixtures, which substrates are coated with titanium dioxide and at least one further metal oxide, under inert conditions at temperatures above 200°C so that the metal of the metal oxide is reduced.

2. Pigments according to Claim 1, characterised in that the metal oxide or the metal oxide mixtures are Fe₂O₃, SnO, SnO₂, Ag₂O, CuO, Ce₂O₃ and/or CeO₂.

3. Process for the preparation of carbon-containing pigments according to Claim 1, characterised in that a plate-like metal oxide or metal oxide mixture or a plate-like substrate coated with metal oxide or metal oxide mixtures, which substrate is coated with titanium dioxide and at least one further metal oxide, is exposed to the gas stream of a highly volatile hydrocarbon at temperatures above 200°C, or in that a liquid or solid carbon-containing compound is applied to the metal oxide or the substrate and then pyrolysed, both variants being carried out with the exclusion of oxygen and in such a manner that the metal of the metal oxide is reduced.

4. Use of pigments according to Claim 1 or 2 in formulations such as paints, dyes, plastics and cosmetics.

5. Formulations containing pigments according to Claim 1 or 2.

## Revendications

1. Pigments lamellaires contenant du carbone, pouvant être obtenus par pyrolyse de composés contenant du carbone, en présence d'oxydes métalliques ou de mélanges d'oxydes métalliques lamellaires, ou de substrats lamellaires revêtus d'oxydes métalliques ou de mélanges d'oxydes métalliques, qui sont revêtus de dioxyde de titane et d'au moins un autre oxyde métallique, dans des conditions inertes à des températures supérieures à 200°C, de façon à réduire le métal de l'oxyde métallique.

2. Pigments selon la revendication 1, caractérisés en ce que, pour ce qui concerne l'oxyde métallique ou les mélanges d'oxydes métalliques, il s'agit de Fe₂O₃, SnO, SnO₂, Ag₂O, CuO, Ce₂O₃ et/ou CeO₂.

3. Procédé de préparation de pigments contenant du carbone selon la revendication 1, caractérisé en ce qu'on expose au courant gazeux d'un hydrocarbure facilement volatil, à des températures supérieures à 200°C, un oxyde métallique ou un mélange d'oxydes métalliques lamellaire ou un substrat lamellaire revêtu d'un oxyde métallique ou de mélange d'oxydes métalliques, revêtu de dioxyde de titane et d'au moins un autre oxyde métallique, ou que l'on applique un composé contenant du carbone, liquide ou solide, sur l'oxyde métallique ou sur le substrat, puis on le pyrolyse, auquel cas, dans les deux variantes, on procède à l'abri de l'oxygène, et de façon à réduire le métal de l'oxyde métallique.

4. Utilisation de pigments selon la revendication 1 ou 2 dans des formulations telles que des peintures, des colorants, des plastiques et des produits cosmétiques.

5. Formulations contenant des pigments selon la revendication 1 ou 2.
